# EUROPÄISCHE PATENTSCHRIFT

(11) **EP 1 259 122 B1**
(45) Veröffentlichungstag und Bekanntmachung des Hinweises auf die Patenterteilung: **28.01.2004**
(21) Anmeldenummer: 01915063.0
(22) Anmeldetag: 28.02.2001
(51) Int. Cl.: A23K 1/00, A23K 1/18, A23P 1/08, B65B 25/06

(54) **HALBFEUCHTES FUTTERMITTELPRODUKT**
SEMI-MOIST ANIMAL FOOD PRODUCT
PRODUIT FOURRAGER SEMI-HUMIDE

(30) Priorität: 29.02.2000 DE 10009510
(43) Veröffentlichungstag der Anmeldung: 27.11.2002
(73) Patentinhaber: Mars Inc., McLean, VA 22101 (US)
(72) Erfinder: HORNIG, Rolf, 27308 Kirchlinteln/Luttum (DE); HOMMOLA, Jürgen, 32427 Minden (DE); STEIN VON KAMIENSKI, Botho, 27283 Verden-Walle (DE)
(74) Vertreter: Goddar, Heinz J., Dr.
(86) Internationale Anmeldenummer: PCT/DE2001/000760
(87) Internationale Veröffentlichungsnummer: WO 2001/064048

(56) Entgegenhaltungen:
- EP-A- 0 927 522
- WO-A-00/33674
- CA-A- 1 103 978
- DE-A- 3 135 867
- GB-A- 2 232 573
- US-A- 4 330 562

## Beschreibung

Die vorliegende Anmeldung betrifft ein Verfahren zur Verpackung eines halbfeuchten Futtermittelproduktes sowie ein mit dem Verfahren abgepacktes Produkt.

Halbfeuchte Futtermittel, insbesondere für Haustiere wie Hunde und Katzen, sind üblicherweise durch Extrusion, anschließendes Schneiden des extrudierten Stranges und abschließendes Frittieren der abgeschnittenen Stücke hergestellte Produkte mit einem Feuchtigkeitsgehalt von ca. 17 bis 22 %.

Die Verpackung derartiger Produkte stellt insofern besondere Probleme, als durch ein zu starkes Zusammendrücken der an ihrer Außenseite fettigen Produktstücke diese nach kurzer Zeit zu einem Block zusammenkleben, der eine Vereinzelung des Produktes für die Portionierung bei der Fütterung nach Öffnen der Verpackung erschwert und sogar teilweise unmöglich macht. Eine Vakuumverpackung ist bei diesen Produkten daher nicht möglich. Dies erfordert einen hohen Raumbedarf bei Transport und Lagerung.

Trockene Futtermittelprodukte, die auch eine durch einem Vakuumsbeschichtungsverfahren aufgefrachte Umhüllungsschicht aufweisen, sind von WO 0 033 674 herbekannt (dieses Dokument wurde nach dem Prioritätsdatum dieses Patentes veröffentlicht).

Der vorliegenden Erfindung liegt daher die Aufgabe zugrunde, ein Verfahren zur Verpackung eines halbfeuchten Futtermittelproduktes zu schaffen, bei dem die geschilderten Probleme vermieden werden können und das insbesondere eine platz- und kostensparende Verpackung bereitstellt.

Erfindungsgemäß wird diese Aufgabe mit dem in Anspruch 1 beanspruchten Verfahren gelöst. Bevorzugte Ausführungsformen ergeben sich aus den Unteransprüchen. Die vorliegende Erfindung betrifft auch ein mit dem obigen Verfahren hergestelltes abgepacktes Futtermittelprodukt.

Überraschenderweise hat sich herausgestellt, daß ein halbfeuchtes Futtermittelprodukt, das mit einer Umhüllungsschicht versehen ist, die durch eine Vakuumbeschichtungsverfahren aufgebracht worden ist, - im Gegensatz zu dem üblichen frittierten Produkt - keine Neigung zur Blockbildung zeigt (wie oben beschrieben), wenn es unter Komprimierung in einer üblichen Kunststoffbeutelverpackung abgepackt wird. Auch nach einer Lagerdauer von mehreren Wochen oder Monaten ist bei Öffnen der Verpackung ein problemloses Vereinzeln und damit Portionieren des Verpackungsinhaltes möglich. Auf diese Weise ist es möglich, ein halbfeuchtes Futtermittelprodukt in komprimierter, platzsparender Form abzupacken. Die Kompression führt zu einer deutlichen Schüttgewichtserhöhung und ermöglicht eine nahezu beliebige Formgebung der Verpackung. Darüber hinaus ist ein derartiges Produkt sehr gleichmäßig mit der Beschichtung überzogen und - trotz eines ähnlichen Fettgehaltes - weniger fettig im Griff und daher angenehmer in der Handhabung für den Tierhalter. Das mit Vakuumbeschichtungsverfahren umhüllte halbfeuchte Futtermittelprodukt hat eine sehr flexible und softe Textur, die auch unter ästhetischen Gesichtspunkten hervorsticht.

Ein solches Produkt wird dadurch erreicht, daß die in üblicher Weise extrudierten, geschnittenen und ggf. auf den gewünschten Feuchtigkeitsgehalt getrockneten Produktstückte in einem Vakuumbeschichtungsverfahren mit einer, bevorzugt fetthaltigen, Umhüllungsschicht versehen werden. Derartige Vakuumbeschichtungsverfahren sind an sich aus dem Stand der Technik bekannt.

Zur Anwendung von Vakuumbeschichtungsverfahren bei der Beladung von Futtermittelstücken mit zusätzlichen Substanzen sei auf die U.S.-Patent 4,371,556, 4,861,606 und 5,716,655 hingewiesen. Diese betreffen allerdings sämtlich die Anwendung bei Trockenprodukten und enthalten keinerlei Hinweis auf die beschriebenen Vorteile bei halbfeuchten Futtermittelprodukten.

Beim Vakuumbeschichtungsverfahren werden die Produktstücke einem Untertruck ausgesetzt und in diesem Zustand, d.h. bei reduziertem Druck, mit einem fließfähigen Beschichtungsmaterial überzogen. In einem beispielhaften Verfahren verläßt ein extrudierter Strang den Extruder mit einer Temperatur von ca. 100°C. Üblicherweise beträgt die Feuchte zu diesem Zeitpunkt etwa 25%. Das extrudierte Erzeugnis kann - entweder vor oder nach dem Schneiden - auf den gewünschten Endfeuchtigkeitsgehalt von zwischen 17 und 22% getrocknet werden, falls erforderlich.

Anschließend werden die Produktstücke zur Vakuumbeschichtung in einen entsprechenden Mischer eingefüllt. Die Einfüllöffnung des Mischers wird verschlossen und der Innendruck innerhalb einer relativ kurzen Zeit von z.B. ca. 15 Sekunden auf z.B. etwa 200 Millibar abgesenkt. Anschließend wird Beschichtungsmaterial (bspw. Fett mit einer Spurenelementemischung) in den Mischer eingeführt und das extrudierte Material mit diesem vermischt. Danach wird der Druck im Mischer wieder bis auf Umgebungstemperatur angehoben, was ein mit einer entsprechenden Umhüllung versehenes Produkt zurückläßt, das anschließend einer üblichen Verpakkungsstation zugeführt werden kann.

Dort wird das Produkt in einer an sich üblichen Weise in eine Kunststoffbeutelverpackung entsprechender Größe abgefüllt. Durch Ausüben von Druck wird der Inhalt komprimiert und in Form gebracht, bevor die Verpackung in üblicher Weise endgültig verschlossen wird.

## Patentansprüche

1. Verfahren zum Verpacken.eines Futtermittelproduktes mit einem Endfeuchtigkeitsgehalt von 17 bis 22 %, das eine Umhüllungsschicht aufweist, die durch ein Vakuumbeschichtungsverfahren aufgebracht worden ist, wobei das Produkt in an sich üblicher Weise in einer Kunststoffbeutelverpackung eingebracht und vor dem endgültigen Verschließen der Verpackung durch Ausüben von Druck auf das Produkt komprimiert und in Form gebracht wird.

2. Verfahren nach Anspruch 1, **dadurch gekennzeichnet, daß** die Umhüllungsschicht fetthaltig ist.

3. Verfahren nach Anspruch 1 oder 2, **dadurch gekennzeichnet, daß** die Umhüllungsschicht weitere Nähr- und/oder Ergänzungsstoffe enthält.

4. Verfahren nach Anspruch 3, **dadurch gekennzeichnet, daß** die fetthaltige Umhüllungsschicht eine Spurenelementemischung enthält.

5. Abgepacktes Futtermittelprodukt, erhältlich durch das Verfahren nach einem der Ansprüche 1 bis 4.

## Claims

1. Method of packaging an animal feed product having a final moisture content of 17 to 22% and having a wrapping coating which has been applied by a vacuum coating method, wherein, in a manner which is usual per se, the product is introduced in a plastic bag packaging and, before the packaging is finally sealed, is compressed and shaped by exertion of pressure on the product.

2. Method according to claim 1, **characterised in that** the wrapping coating contains fat.

3. Method according to claim 1 or 2, **characterised in that** the wrapping coating contains additional nutrients and/or supplements.

4. Method according to claim 3, **characterised in that** the fat-containing wrapping coating contains a mixture of trace elements.

5. Packaged animal feed product which can be obtained by the method according to one of claims 1 to 4.

## Revendications

1. Procédé de conditionnement d'un produit fourrager avec une teneur en humidité finale de 17 à 22 %, présentant une couche d'enrobage, qui est déposée grâce à un procédé de revêtement sous vide, le produit étant introduit de façon habituelle dans un emballage de poche en matière plastique et étant comprimé et mis en forme, avant le scellage final, en exerçant une pression sur le produit.

2. Procédé selon la revendication 1, **caractérisé en ce que** la couche d'enrobage contient des matières grasses.

3. Procédé selon la revendication 1 ou 2, **caractérisé en ce que** la couche d'enrobage contient en outre des nutriments et/ou des aliments de complément.

4. Procédé selon la revendication 3, **caractérisé en ce que** la couche d'enrobage contient un mélange d'oligo-éléments.

5. Produit fourrager conditionné, susceptible d'être obtenu selon l'une quelconque des revendications 1 à 4.
